# EUROPÄISCHE PATENTSCHRIFT

(11) **EP 2 242 814 B1**
(45) Veröffentlichungstag und Bekanntmachung des Hinweises auf die Patenterteilung: **26.10.2011**
(21) Anmeldenummer: 08872423.2
(22) Anmeldetag: 29.12.2008
(51) Int. Cl.: C09K 8/584, C09K 8/60

(54) **TENSIDE, VERWENDUNG VON TENSIDEN IN DER ERDÖLFÖRDERUNG**
SURFACTANTS, USE OF SURFACTANTS FOR CRUDE OIL RECOVERY
TENSIOACTIFS ET UTILISATION DE TENSIOACTIFS POUR L'EXTRACTION DE PÉTROL

(30) Priorität: 11.02.2008 AT 2142008
(43) Veröffentlichungstag der Anmeldung: 27.10.2010
(73) Patentinhaber: Bereuter, Heinz, 6971 Hard (AT)
(72) Erfinder: Bereuter, Heinz, 6971 Hard (AT)
(74) Vertreter: Schwarz & Partner
(86) Internationale Anmeldenummer: PCT/AT2008/000475
(87) Internationale Veröffentlichungsnummer: WO 2009/100468

(56) Entgegenhaltungen:
- EP-A- 0 319 942
- WO-A-97/25394
- US-A- 4 144 182

## Beschreibung

Die Erfindung betrifft Tenside und die Verwendung von beetimmten Tensiden in der Erdölförderung,

Da in der Natur vorkommendes Erdöl von selbst nur selten aus der Erde sickert, gewinnt man es daher fast ausnahmslos aus tieferen ölreichen Schichten mit Bohrtürmen, mit denen rotierende, an Stahlrohren befestigte Bohrer teilweise kilometertief in die Erde versenkt werden.

Wenn sich in der Erde über dem Erdöl hochgespanntes Erdgas angesammelt hat, kann dieses das angehohrte Erdöl im Bohrloch empor pressen, sodass ein sogenannter "Springer" entsteht. Bei drucklosen Erdöllagerstätten muss man das Erdöl herauspumpen. Lässt die natürliche Produktivität durch Eigendruck und/oder natürlichen Zufluss zur Pumpe nach (sogenannte Primärförderung), so kann die Ausbeute durch Einpressen von Erdgas oder Wasser verbessert werden. In diesem Fall spricht man von sogenannter Sekundürförderung.

Mit herkömmlichen Primär und Sekundärförderungsmaßnahmen erreicht man lediglich eine ca. 30%ige Entölung des Erdöllagers. Um auch den in früheren Zeiten vernachlässigten Rest nutzbar zu machen, muss man auf Verfahren der sogenannten Tertlärförderung zurürkgreifen, Dabei kann das Erdöl von den erdölführenden Gesteinen oder Ölsänden durch Erwärmen mit Heißwasser (z.B. bei 200°C und 40 bar) oder Wasserdampfdruok (bei 340°C) oder durch begrenzte unterirdische Brände gelöst und durch Wärmefluten gewonnen werden. Mit diesen aufwändigen Methoden kann der Nutzungsgrad von Erdöllagerstätten auf etwa 45% und in seltenen Fällen auf etwa 60% erhöht werden (Quelle z.B. http://www.erdoel-erdgss.de).

Bei den meisten großen Lagerstätten der Erde, etwa in den ASA, im arabischen Raum oder auch in Österreich, wird durch Einpressen von Wasser in die Lagerstätten der Druck wieder erhöht und dadurch 20 bis 40% des vorhandenen Erdöle gefördert.

Dieses Erdöt-Wassergemtsch mit einem Ölantell von 10 bis 50 Gew. % wird in riesigen Tanks zwischangelegert und dabei getrennt

Aus dem Stand der Technik ist es beispielsweise bekannt, den Ölantell zu erhöhen und die Ausbeute zu steigern, indem dem Wasser Tenside zugesetzt werden. Das Fluten mit Tensiden zur tertiären Erdölförderung konnte sich wagen mangelnder Ausbeute wirtschaftlich aber kaum durchsetzen. Zudem wird im Kalkgesteln das eingepresste Wasser so stark ausgehärtet, dass nicht hartwasserbeständige Tenside als Kalkesifen ausfallen und keine Wirkung mehr entfalten.

Aufgabe der vorliegenden Erfindung ist es daher, ein Verfahren zur Erdölförderung bereitzustellen, mit dem die Ausbeute erhöht werden kann und bei dem die Nachteile des Standes der Technik vermindert sind.

Erreicht wird dies durch die Verwendung von Tensiden der Formel A oder von Salzen von Tensiden der Formel A 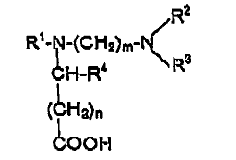 (Verbindung der Formel A),
wobei
- R¹: einen Alkanoylrest mit 6 bis 20 Kohlenstoffatomen,
- R²: den Rest R¹ oder das Radikal 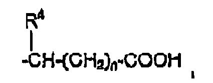
- R³: das Radikal 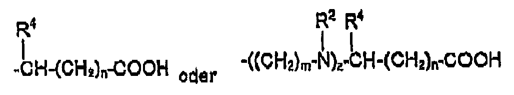 oder 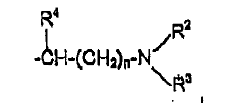
- R⁴: einen Alkylrest mit 1 bis 3 Kohlenstoffatomen oder ein wasserstoffatom,
- m: eine ganze Zahl von 2 bis 6,
- n: eine ganze Zahl von 0 bis 2 und
- z: eine ganze Zahl von 1 bis 6 bedauten.

Bevorzugt handelt es sich aus Löslichkeitsgründen um Alkall- oder Aminsalze.
Die überraschende Erkenntnis, dass Tenside der Formel A oder Salze von Tensiden der Formel A eine ausgezeichnete Grenzflächenaktivität mit hervorragender Kriechwirkung und hoher Hartwasserbeständigkeit haben, führt dazu, dass mit den Tensiden eine 80 bis tellweise 80%ige Entölung des erdölführenden Gesteins erreicht werden kann. Zusätzlich haben die Tenalde der Formel A den Vorteil, dass sie biologisch leicht abbaubar sind und daher keine Umweltbelastung darstellen.

Im Gegensatz zu anderen Tensiden, die bereits für die Erdölförderung beschrieben wurden (siehe beispielsweise die EP 0 319 942 A2), weisen die gegenständlichen Tenside den Vortell auf, dass sie nicht fluorhältig sind, während in der EP 0 319 842 A2 perfluorlerte Alksnoyirests vorgesehan sind. Fluarkohlanwasaerstoffe sind beispielsweise aufgrund des Montreal-Protokolls für viele Einsatzgeblete verboten und soilten auch nur mehr unter kontrollierten Bedingungen ohne der Gefahr in die Atmosphäre zu treten, eingesetzt werden,

Verbindungen der Formel A sind beispielsweise aus der US 4,144,182 bekannt. Diese werden dort allerdings als Kühl- und Schmiermittel beschrieben. Ähnliche Verwendungen sind aue der WO 97/25394 A1 und der AT 344 854 bekannt. Diese korrosionsinhibierenden und/oder schaurnbremaanden Tenside werden Kühl- und Metallbearbeitungsmitteln zugesetzt.

Derartige vollsynthetische Kühischmiermittel werden bei der spanenden und der spanlosen Metallbearbeltung gegenüber Emulsionen mit einem Mineralölgehalt bis 60% oder waeserunlösitohen Motolltearbaltungeölen singesetzt. Diese mineralölhaltigen Mittel hinterlassen intensive Ölabiagerungen auf der Maschinenverkleldung, im Bearbeltungsbereich, in den Leitungen und auf dem Fußboden. Diese Ablagerungen können mit wässrigen "herkämmlichen" Tensidlösungen nicht entfernt werden, sondern es massen Lösungsmittel verwendet werden.

Wird dagegen eine drei- oder höharprazentige wäserige Lösung, die das korroslanslnhlblerende Tensid enthält, singefüllt, so werden die mineralölhaltigen Ablagerungen durch den Sprühnebei blitzblank abgewaschen.

Die Erkenntnis, dass biologisch leicht abbaubare Tenside für die Metellbearbeltung als hochwirksame Entölungsmittel für die tertläre Erdölförderung eingesetzt werden können, ist keineswegs nahetlegend, aber für die Umweit, die Mineralölwirtschaft und die Weltwirtschaft von größtem interesse, Durch die nachfolgend beschriebenen, speziell die namentlich angsführten Verbindungen kann ein 80 bis 90-%ige Entölung des erdölführenden Geseteins erreicht werden.

Die erfindungegemäßen Verbindungen können mit entsprechenden Basen, wie beispieieweise Alkallen oder Aminen, vorzugsweise Alkanolamine, wie Mono-, Di- oder -Tristhanolaminen in äquivalentem Verhältnis oder auch im Überschuss umgesetzt werden.

Diese Verbindungen enthalten pro Molekül 4 oder mehr grenzflächenaktive Gruppen, So enthält Z.B. die Verbindung 3 pro Malekül 2 lipophile Reste, also doppelt so viele wie die bisher im Einsatz befindlichen Tenside, Dadurch ist auch die Trennwirkung zwischen Erdöl und erdölführenden Gestein doppelt so hoch, Da auch zwei hydrophile Gruppen statt einer bei den bisherigen Tensiden zur Verfügung stehen, ist die Wasserfreundlichkeit doppelt so hoch. Die Oberflächenspannung wird also um das Vierfache erniedrigt. Dadurch kann auch das stark gebundene Erdöl abgelöst und gefördert werden.

Zum besseren Verständnis werden schematische Formein der bisher bei der Tertiärförderung im Einsatz befindlichen Tenside den hier beschriebenen Alkanoylamlnocarbonaäuren gegennbargestellt, wobei R, R', R" aliphatische Kohlenwasserstoffketten von 6 bis 20 Kohlenstoffen bedeuten:
1. R-COONa,
2. R-CHR'-OSO₃Na.
3. 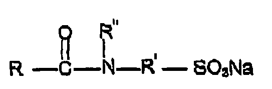 oder
4. R-CH₂-OC₂H₄-(O-C₂H₄)₀₋₁-OH.

Im Rahmen der Erfindung wurden einige Beispiele von Verbindungen der Formel A auf ihre Tauglichkeit hin untersucht Konkret handelt es sich um die Verbindungen (bzw. deren Saize):
1. N,N'-Diisononanoyl-ethylendiamin-N,N'-diessigsäure
   (N,N'-Di-(3, 5, 5-trimethylhexanoyl)-ethylendiamin-N,N'-diessigsäure) 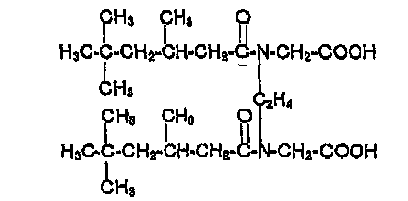
2. N,N'-Diisononanoyl-ethylendiamin-N'-diisobuttersäure 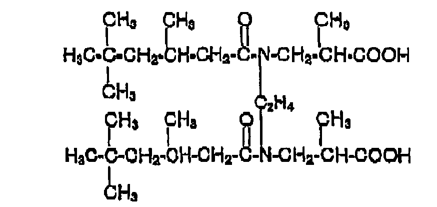
3. N,N'-Didodecanoyl-propylendiemin-N,N'-dipropionsäure 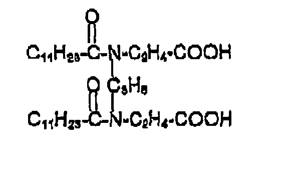
4. N,N',N"-Triisononaoyl-diethylentriamin-N,N"-dipropionsäure 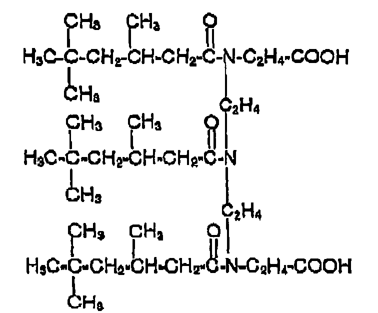
5. N,N',N",N"'-Tetraoctadecanoyl-triethylentetreamin-N,N"'-dipropionsäure

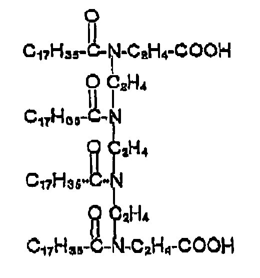

Da die Verbindungen 2 und 5 noch unbekannt sind, betrifft die Erfindung auch die Verbindungen 2 und 5 und deren Verwendung zu den genannten Zwecken. Für die Charakterisierung wird auch auf die US 4,144,182 und die AT 344 854 verwiesen.

Die erfindungsgemäß angeführten Verbindungen sind alle stark verzweigt und dadurch wesentlich elastischer und beweglicher als bisher bei der Tertiärförderung im Einsatz befindliche spröde Tenside. Da auch zwei oder mehr lipophlie Gruppen pro Molekül zur Verfügung stehen, ist der Drang zum Eindringen zwischen Öl und Trägermaterial wesentlich stärker. Daraus erklärt sloh die starke Entölung - selbst Asphalt wird durch eine zweiprozentige Lösung aufgelöst.

Die entsprechenden Verwendungen werden in der Regel in wäseriger Lösung durchgeföhrt Der Gehalt an Tensid bzw, dem Salz des Tensids beträgt dabei günstigerwetse zwischen 0,3 bis 15 Gew.%, vorzugsweise zwischen 0,6 bis 5 Gew.%.

Aus der oben genannten Verwendung ergibt sich natürlich ein entsprechendes Verfahren zur Gewinnung von Erdöl via gekundärförderung bzw. Tertlärförderung, unter Verwendung von in Wasser gelöstem Tensid oder Salz des Tensids der Formel A.

Der Gehalt an Tensid der Formel A bzw, dem Salz des Tenside der Formel A baträgt ebenfalls günstigerweise zwischen 0,3 bis 16 Gew.%, vorzugsweise zwischen 0,6 bis 6 Gew.%. Die optimals Konzentration richtet sich nach den Lager- und Ölbedingungen bzw. der Rückstandsmenge, Die übrigen Verfahrensbedingungen richten können wie bei herkömmlichen Verfahren gewählt werden, beispielsweise bei der Erdölförderung wie beim Einpressen von Wasser in die Lagerstätten, Die Vedahrensbadingungen können an die jeweilige Situation immer optimal angepasst werden, Regelmäßig wird man die wässrige Lösung mit dem Tensid unter hohem Druck von mehreren, bar beim jeweiligen Verfahren einsetzen,

### Beisplele:

Auch über Jahre eingetrocknetes, eingebranntes Erdöl lässt sich mit der Lösung von 20 Gramm/Liter Alkalisalz der Verbindung 3 vom Trägermaterial durch Unterwandern ablösen. Dadurch ergibt sich, dass durch die mechanische Bewegung des Flutens eine noch rentable BO bis 90%lge Entölung des erdölführenden Gesteins möglich ist, Dieses Öl-Wassergemisch fließt zur Pumpe, wird gefördert, in den bereite vorhandenen riesigen Tanks zwischengelagert und anschließend getrennt. Da das hartwasserbeständige Tensid keine emulglerende Wirkung hat, ist die Trennung optimal. Dia wässrige Lösung wird wieder eingepresst und die erdölführenden Schichten weitgehend ölfrei gewaschen.

Die thermische Beständigkeit der Verbindungen bis zur Lagerstättentemperatur ist gegeben. Ebenso die Beständigkeit und Wirksamkeit gegenüber allen Komponenten des Lageratättenmedlums,

Seit einigen Jahrzehnten bedient sich die weltweite Ölindustrie des Einpressens von Wasser in die Lagerstätten. Es sind also alle investitionen bereits erfolgt. Es braucht nur noch der Zusatz des erfindungsgemäßen Tensids, um den Größtell der zwei Drittel das nach den derzeitigen Fördermöglichkeiten nicht förderbaren Erdöle zu heben,

Eine der zwei Hauptaufgaben der Erdölforschung, die Entwicklung wirkungsvollerer Methoden der Entölung, ist mit dieser Entwloklung erfüllt. Bei den derzalt 600.000 fördernden Ölsonden lässt sich die Ausbeute durch das neue Tensid verdoppeln. Dadurch wird mit einem Schlag die abbaubare Erdölreserve wesentlich erhöht. Die derzeit als erschöpft geltenden Erdölfelder können mit dem erfindungsgemäßen Tensid wieder gewinnbringend ausgebeutet werden. Durch die erhöhte Grenzflächenaklvität werden die erdölhältigen Schichten schneller unterwandert und dadurch mehr Erdöl abgehoben. Dadurch steigt auch der Ölanteil in den erpumpfen Öl-Wassergemisch. Durch die erhöht verfügbaren Erdölreserven lässt sich der steigende Bedarf von wachsenden industrienationen beeser abdecken und eine Stabilisierung des Erdölpreises kann erwartet werden,

## Patentansprüche

1. Verwendung von Tensiden oder Salzen von Tensiden der Formel A 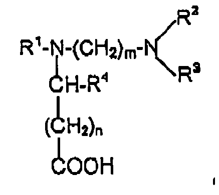 wobei
R¹ einen Alkanoylrest mit 6 bis 20 Kohlenstoffatomen,
R² den Rest R¹ oder das Radikal 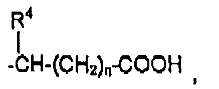
R³ das Radikal 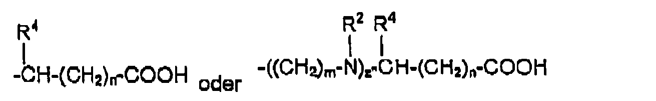 oder 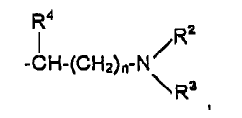
R⁴ einen Alkylrest mit 1 bis 3 Kohlenstoffatomen oder ein Wassorstoffatom,
m eine ganze Zahl von 2 bis 6,
n eine ganze Zahl von 0 bis 2 und
z eine ganze Zahl von 1 bis 6 bedeuten,
für die Sekundärförderung und / oder Tertiärförderung von Erdöl.

2. Verwendung nach Anspruch 1, **dadurch gekennzeichnet, dass** das Tensid oder Salz des Tensids in Wasser gelöst ist.

3. Verwendung nach Anspruch 2, **dadurch gekennzeichnet, dass** das Tensid oder Salz des Tensids in einer Konzentration von 0,3 bis 15 Gew.%, vorzugsweise von 0,6 bis 5 Gew.% enthalten ist.

4. Verfahren zur Sekundär- oder Tentlärförderung von Erdöl unter Verwendung eines In Wasser gelösten Tensids oder Salzes eines Tensids der Formel A 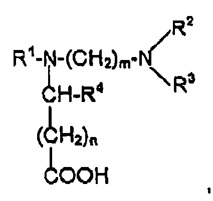 wobei
R¹ einen Alkanoylrest mit 6 bis 20 Kohlenstoffatomen,
R² den Rest R¹ oder das Radikal 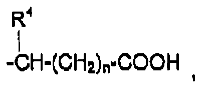
R³ das Radikal 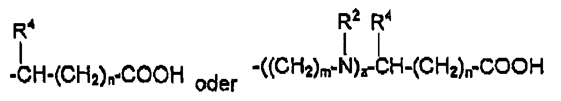 oder 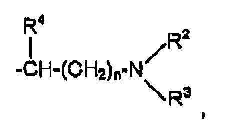
R⁴ einen Alkylrest mit 1 bis 3 Kohlenstoffatomen oder ein Wasserstoffatom,
m eine ganze Zahl von 2 bis 6,
n eine ganze Zahl von 0 bis 2 und
z eine ganze Zahl von 1 bis 6 bedeuten.

## Claims

1. Use of surfactants or of salts of surfactants of the formula A 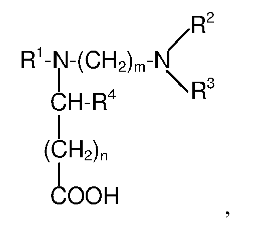 wherein
R¹ denotes an alkanoyl residue with 6 to 20 carbon atoms,
R² denotes the residue R¹ or the radical 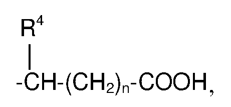
R³ denotes the radical 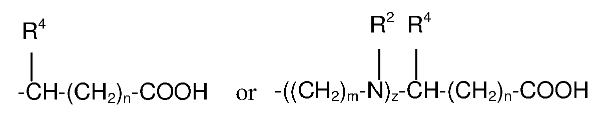 or 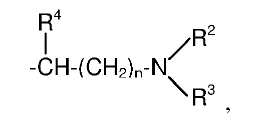
R⁴ denotes an alkyl residue with 1 to 3 carbon atoms or a hydrogen atom,
m denotes an integer of 2 bis 6
n denotes an integer of 0 bis 2 and
z denotes an integer of 1 bis 6
for the secondary conveying and/or tertiary conveying of crude oil.

2. Use according to one of claim 1 **characterised in that** the surfactant or salt of the surfactant is dissolved in water.

3. Use according to claim 2 **characterised in that** the surfactant or salt of the surfactant is contained in a concentration of 0.3 to 15 % by weight, preferably 0.6 to 5.% by weight.

4. A method of secondary conveying and/or tertiary conveying of crude oil using a surfactant or a salt of a surfactant of formula A dissolved in water 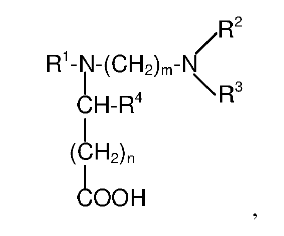 wherein
R¹ denotes an alkanoyl residue with 6 to 20 carbon atoms,
R² denotes the residue R¹ or the radical 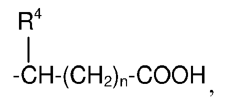
R³ denotes the radical 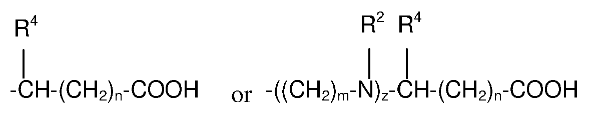 or 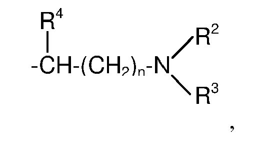
R⁴ denotes an alkyl residue with 1 to 3 carbon atoms or a hydrogen atom,
m denotes an integer of 2 to 6,
n denotes an integer of 0 to 2 and
z denotes an integer of 1 to 6.

## Revendications

1. Utilisation d'agents tensioactifs ou de sels d'agents tensioactifs de formule A 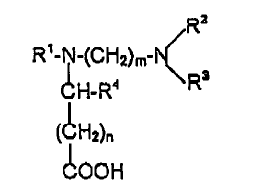 où
R¹ signifie un radical alcanoyle comprenant 6 à 20 atomes de carbone,
R² signifie le radical R¹ ou le radical 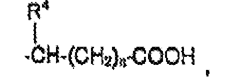
R³ signifie le radical 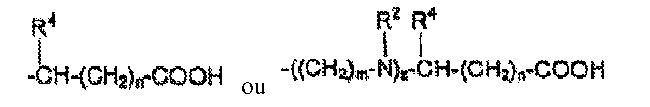 ou 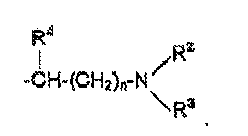
R⁴ signifie un radical alkyle comprenant 1 à 3 atomes de carbone ou un atome d'hydrogène,
m vaut un nombre entier de 2 à 6,
n vaut un nombre entier de 0 à 2 et
z vaut un nombre entier de 1 à 6,
pour l'extraction secondaire et/ou tertiaire du pétrole.

2. Utilisation selon la revendication 1, **caractérisée en ce que** l'agent tensioactif ou le sel de l'agent tensioactif est dissous dans l'eau.

3. Utilisation selon la revendication 2, **caractérisée en ce que** l'agent tensioactif ou le sel de l'agent tensioactif est contenu en une concentration de 0,3 à 15% en poids, de préférence de 0,6 à 5% en poids.

4. Procédé pour l'extraction secondaire ou tertiaire de pétrole avec utilisation d'un agent tensioactif ou d'un sel d'un agent tensioactif dissous dans l'eau de formule A 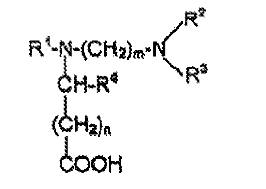 où
R¹ signifie un radical alcanoyle comprenant 6 à 20 atomes de carbone,
R² signifie le radical R¹ ou le radical 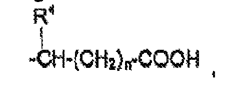
R³ signifie le radical 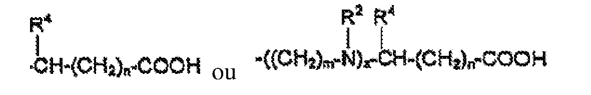 ou 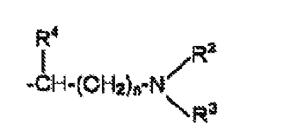
R⁴ signifie un radical alkyle comprenant 1 à 3 atomes de carbone ou un atome d'hydrogène,
m vaut un nombre entier de 2 à 6,
n vaut un nombre entier de 0 à 2 et
z vaut un nombre entier de 1 à 6.
